Europäisches Patentamt

European Patent Office

Office européen des brevets

(19)

(11) **EP 0 782 336 B1**

(12) **FASCICULE DE BREVET EUROPEEN**

(45) Date de publication et mention
de la délivrance du brevet:
**24.10.2001 Bulletin 2001/43**

(51) Int Cl.⁷: **H04N 7/08**

(21) Numéro de dépôt: **96120157.1**

(22) Date de dépôt: **16.12.1996**

(54) **Système de transmission de données comprenant un transmetteur de données et un dispositif de détection d'informations portatif destiné à recevoir ces données**

Einrichtung zur Datenübertragung mit einem Datensender und einer tragbaren Informationserfassungsvorrichtung zum Empfang dieser Daten

Data transmission system comprising a data transmitter and a portable information detection device for receiving these data

(84) Etats contractants désignés:
**CH DE GB IT LI NL**

(30) Priorité: **28.12.1995 FR 9515635**

(43) Date de publication de la demande:
**02.07.1997 Bulletin 1997/27**

(73) Titulaire: **ASULAB S.A.**
**CH-2501 Bienne (CH)**

(72) Inventeurs:
• **Farine, Pierre-André**
**2003 Neuchâtel (CH)**

• **Zellweger, Emil**
**4514 Lommiswil (CH)**
• **Pollini, Alexandre**
**1003 Lausanne (CH)**

(74) Mandataire: **Balsters, Robert et al**
**I C B,**
**Ingénieurs Conseils en Brevets S.A.,**
**7, rue des Sors**
**2074 Marin (CH)**

(56) Documents cités:
**WO-A-95/15057       WO-A-95/33316**
**CH-A- 639 236         US-A- 4 807 031**
**US-A- 5 432 851**

## Description

La présente invention concerne un système de transmission de données comprenant un transmetteur de données et un dispositif de détection d'informations portatif destiné à recevoir desdites données transmises par ledit transmetteur de données. En particulier, l'invention concerne un tel système de transmission de données dont le transmetteur de données comporte des moyens d'affichage à balayage tramé et des moyens générateur de signaux vidéo et de synchronisation pour commander le fonctionnement dudit écran d'affichage à balayage tramé.

La présente invention peut être utilisée dans le cadre de la transmission de données d'un ordinateur, comportant un moniteur à balayage tramé, à une montre-réceptrice, l'invention étant décrite ci-après en relation avec cet exemple d'application auquel elle n'est toutefois pas limitée.

On notera qu'il est connu du brevet CH 639 236 une pièce d'horlogerie comportant un dispositif de réception d'informations sous forme de signaux électromagnétiques, ce dispositif utilisant une bobine présente dans la pièce d'horlogerie pour une autre fonction, notamment la bobine associée au moteur d'entraînement des aiguilles d'un affichage analogique de l'heure.

On connaît déjà des systèmes de transmission de données tel que définis ci-dessus. La demande de brevet WO 95/15057 au nom de Timex Corporation, par exemple, décrit un système pour transmettre des données d'un ordinateur à une montre-réceptrice. Le moniteur est équipé d'un générateur de signaux vidéo qui effectue un balayage tramé de l'écran. Les données sont transmises à la montre-réceptrice en modulant la luminosité de l'écran pendant le balayage tramé afin de générer des impulsions de lumière correspondant à des informations binaires. La montre-réceptrice comporte un photodétecteur fixé sur son boîtier pour détecter les impulsions de lumière transmises.

Cependant, un tel système présente un certain nombre d'inconvénients. D'abord, le photodétecteur exige une orientation précise par rapport à l'écran du moniteur à balayage tramé pour pouvoir capter ces impulsions de lumière transmises.

Un tel système nécessite également le placement d'un élément supplémentaire sur la surface extérieure de la montre-réceptrice, à savoir le photodétecteur. Ceci pose souvent des problèmes lors de la conception de la montre-bracelet, compte tenu de ses dimensions petites.

Un autre problème est lié au fait que la transmission de données se fait par une variation de la luminosité de l'écran du moniteur. Cette transmission risque d'être perceptible et donc gênante à l'utilisateur.

De plus, la luminosité de l'écran peut être variée par l'utilisateur sur la plupart des moniteurs disponibles dans le commerce. De ce fait, la transmission correcte de données par variation de cette luminosité ne peut pas toujours être assurée par ce système.

Ainsi, la présente invention a pour objet de fournir un système de transmission de données du type défini ci-dessus qui surmonte les inconvénients de l'art antérieur.

En outre, l'invention a également pour objet de fournir un tel système de transmission de données dont la réalisation est simple, fiable et peu encombrante.

De plus, l'invention a pour objet de fournir un tel système de transmission de données dont la réalisation ne nécessite qu'un nombre minimal d'éléments.

A cet effet, l'invention a pour objet un système de transmission de données comprenant d'une part un transmetteur de données comportant des moyens d'affichage à balayage tramé, et des moyens générateur de signaux pour commander le fonctionnement desdits moyens d'affichage à balayage tramé; et d'autre part un dispositif de détection d'informations portatif destiné à recevoir desdites données transmises par ledit transmetteur de données. Ce système est caractérisé en ce que ledit transmetteur de données comprend en outre des moyens de modulation d'au moins un des signaux de commande en fonction desdites données à transmettre, et en ce que ledit dispositif de détection d'informations portatif comprend en outre une antenne inductive agencée pour capter ledit au moins un signal modulé.

Grâce à cette combinaison de caractéristiques, le dispositif de détection d'informations portatif ne nécessite aucune orientation particulière par rapport à l'écran du moniteur à balayage tramé pour pouvoir capter les données transmises. En outre, aucun élément supplémentaire ne doit être placé sur la surface extérieure du dispositif de détection d'informations portatif.

D'autres caractéristiques et avantages de l'invention apparaîtront plus clairement à la lecture de la description détaillée qui suit, faite en référence aux dessins annexés, représentant à titre d'exemple un mode de réalisation du système de transmission de données de l'invention, et dans lesquels :

- la figure 1 est une représentation globale d'un système de transmission de données selon la présente invention;
- la figure 2 est un schéma de fonctionnement du moniteur à balayage tramé du transmetteur de données qui fait partie du système de la figure 1;
- la figure 3 est un schéma du transmetteur de données faisant partie du système de la figure 1;
- la figure 4 représente de manière schématique diverses ondes produites dans le transmetteur de données de la figure 3; et
- la figure 5 est un schéma du dispositif de détection d'informations portatif faisant partie du système de transmission de données de la figure 1.

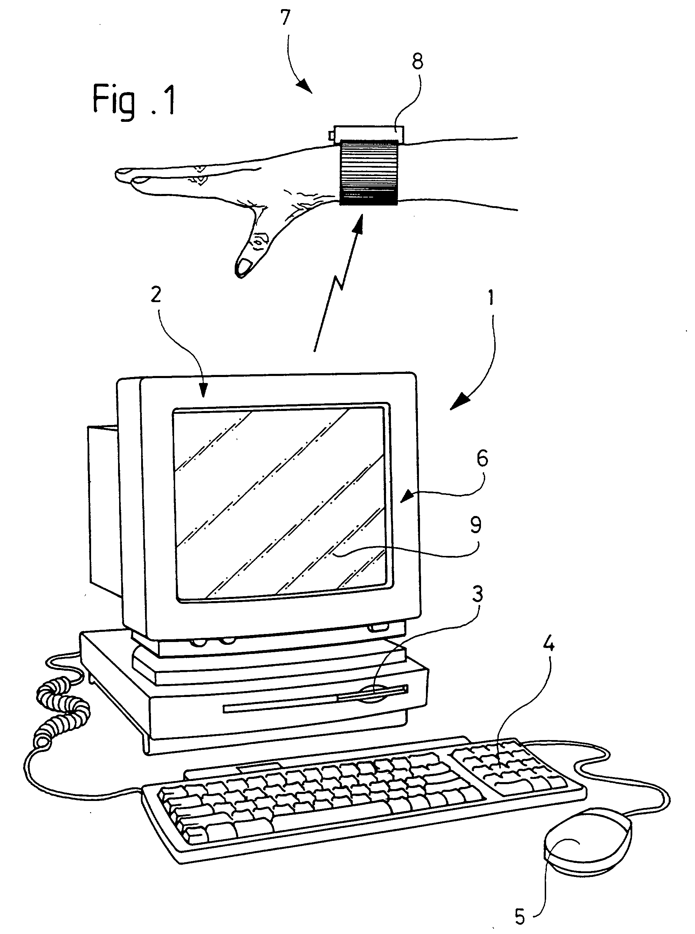

La figure 1 présente un transmetteur de données 1 comportant des moyens d'affichage à balayage tramé 2. Dans ce mode de réalisation, le transmetteur de données 1 est constitué par un ordinateur conventionnel 3, un clavier 4 et une souris 5, tandis que les moyens d'affichage 2 sont constitué par un moniteur cathodique à balayage tramé 6. En outre, la figure 1 montre un dispositif de détection d'informations portatif 7 destiné à recevoir des données provenant du transmetteur de données 1. Dans le présent exemple, le dispositif d'information portatif 7 est constitué par une montre-bracelet 8 portée sur l'avant-bras d'un utilisateur.

Le moniteur 6 comporte un écran conventionnel 9 sur lequel sont affichées des images visuelles, ces dernières étant reconstituées sur l'écran à phosphore 9 à partir de signaux électriques vidéo composites.

Les données transmises à la montre-bracelet 8 peuvent être générées dans l'ordinateur 3. Comme alternative, les données peuvent être reçues de manière asynchrone à partir d'une source externe, tel qu'un modem relié à une source de données éloignée. Si le moniteur 6 est un affichage vidéo d'une télévision, la source de données peut être l'entrée d'une antenne ou l'entrée d'un câble qui est reliée à des moyens de contrôle des images qui apparaîtront sur l'écran 9.

Comme on le sait, toute image peut être définie par une fonction mathématique de luminosité $B(x,y,t)$ qui dépend de trois variables : la coordonnée horizontale x, la coordonnée verticale y et le temps t. Chaque image peut donc être découpée en une série d'ondes prédéterminée et systématique qui peuvent être reconstituées sur l'écran 9 afin de produire une réplique identique à l'image originale. Pour faire cette reconstruction, le moniteur 6 comporte un canon à électrons (non représenté) qui produit un faisceau d'électrons. Lorsque le faisceau d'électrons frappe la surface intérieure de l'écran 9, le phosphore à ce point de frappe émet une radiation électromagnétique dans la gamme de fréquence visible. Ainsi, l'intensité de ce faisceau règle la luminosité de l'écran à ce point. La trajectoire du faisceau d'électrons est contrôlée pour déterminer la coordonnée horizontale x et la coordonnée verticale y du point de l'écran qui est momentanément activé à un temps t donné. Ainsi, le faisceau d'électrons trace une ligne systématique sur l'écran 9 qui permet la synthétisation de l'image désirée.

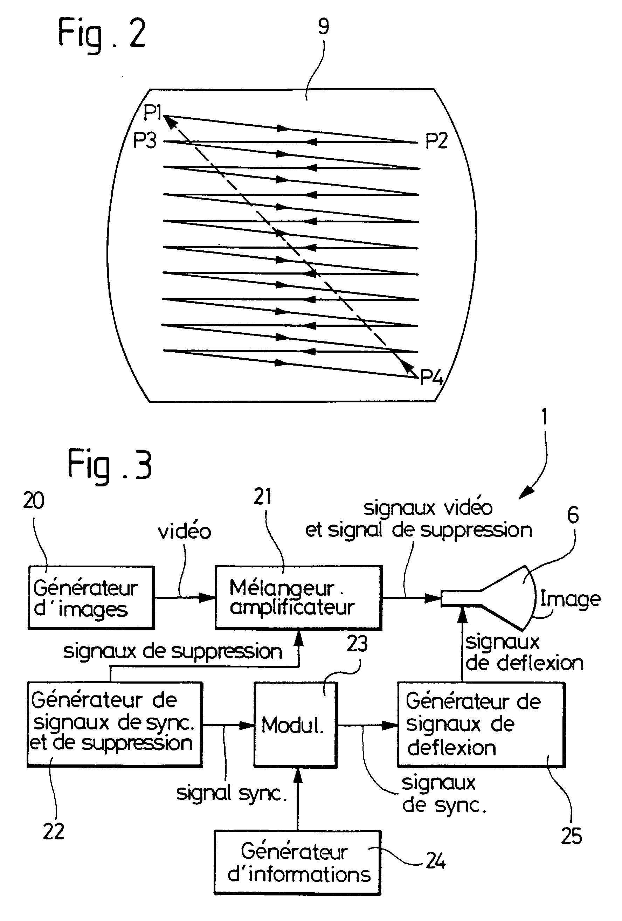

Un exemple d'un moniteur que l'on trouve dans le commerce est un moniteur SVGA (qui est un acronyme de la phrase anglaise «Super Video Graphic Adapter»). Une image reconstituée sur l'écran d'un moniteur SVGA comprend 600 lignes dont environs 570 sont actives dans la synthèse de l'image. Comme représenté sur la figure 2, le faisceau d'électrons balaie de gauche à droite sur chacune de ces 570 lignes, ligne par ligne et du haut en bas de l'écran, pour effectuer cette synthèse d'image.

Un signal vidéo composite est généré pour commander le fonctionnement du moniteur 6. Un tel signal vidéo composite est constitué par un nombre de signaux élémentaires, à savoir un signal vidéo, des signaux de suppression et des signaux de synchronisation.

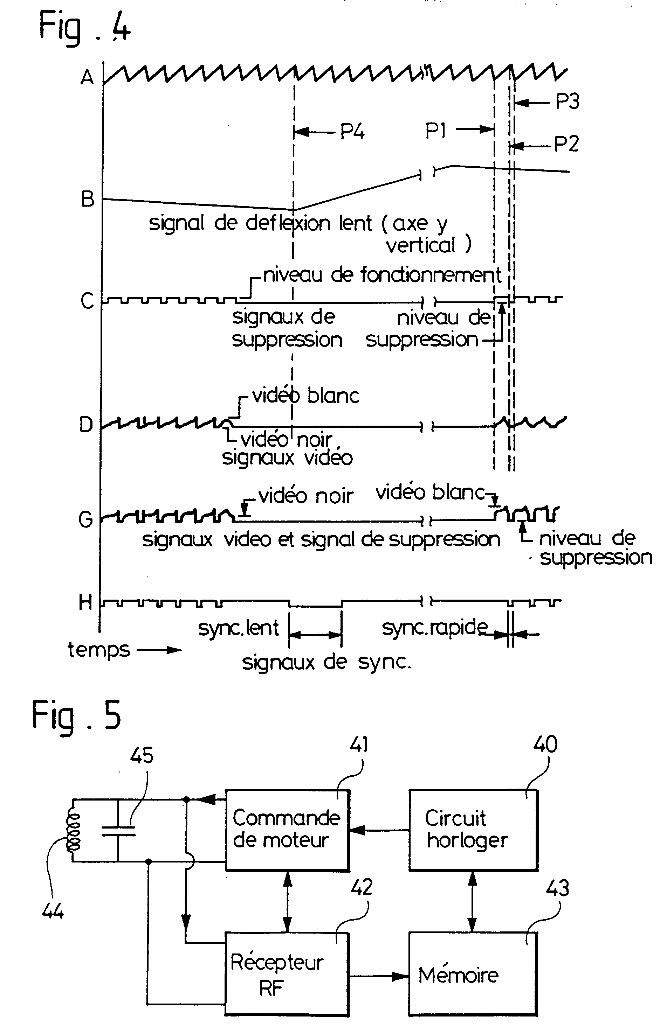

En se référant désormais à la figure 3, on voit un schéma partiel d'un mode de réalisation du transmetteur de données 1 et du moniteur à balayage tramé 6. Dans cet exemple, le transmetteur de données 1 comprend un générateur de signaux constitué par un générateur d'images 20 et un générateur de signaux de synchronisation et de suppression 22. Le transmetteur de données 1 comprend également un mélangeur/amplificateur 21, un modulateur 23, un circuit de génération de données à transmettre 24, un générateur de signaux de déflexion 25 et le moniteur 6. Ces éléments seront décrits à l'aide de la figure 4, qui montre, de manière simplifiée et schématique, des formes d'ondes à divers endroits du transmetteur de données de la figure 3.

Le générateur d'images 20 génère des signaux vidéo comprenant chacun une série d'ondes prédéterminée qui peuvent être reconstituées sur l'écran 9 par un balayage tramé afin de produire une image désirée. Un exemple d'une telle série d'ondes est montré sur la figure 4 par l'onde référencée D.

Le générateur de signaux de synchronisation et de suppression 22 génère, d'une part, des signaux de suppression, tel que l'onde représentée sur la figure 4 par la référence C, pour que le canon à électrons soit désactivé durant le retour du faisceau d'électrons de la fin d'une ligne de trame au début de la prochaine ligne, par exemple, entre les points P2 et P3 de la figure 2. De même, le canon à électrons est également désactivé durant le retour du faisceau d'électrons de la fin de l'ultime ligne d'une trame au début de la première ligne de la prochaine trame, par exemple, entre les points P4 et P1 de la figure 2.

Les signaux de suppression provenant du générateur de signaux de synchronisation et de suppression 22 sont mélangés avec les signaux de sortie du générateur d'images 20 par le mélangeur/amplificateur 21. Ainsi, un signal vidéo composite, tel que l'onde référencée G sur la figure 4, est fourni à l'entrée vidéo du moniteur à balayage tramé 6.

Le générateur de signaux de synchronisation et de suppression 22 génère, d'autre part, un ensemble de signaux de synchronisation horizontale et verticale, tel que l'onde représentée sur la figure 4 par la référence H. Ces signaux de synchronisation horizontale et verticale déterminent respectivement le début des ondes de déflexion horizontale et verticale.

Les signaux de synchronisation horizontale et verticale sont utilisés pour synchroniser le fonctionnement du générateur de signaux de déflexion 25. Ce dernier génère deux séries d'impulsions en dents de scie qui commandent la déflexion du faisceau d'électrons respectivement selon les axes horizontal et vertical. A ce propos, la déflexion rapide du faisceau d'électrons selon l'axe horizontal est commandée par une première onde à déflexion, référencée A sur la figure 4. De même, la déflexion plus lente du faisceau d'électrons selon l'axe vertical est commandée par une deuxième onde à déflexion, référencée B sur la figure 4. Comme on voit sur cette figure et sur la figure 2, les impulsions de synchronisation horizontale déterminent le début (par exemple, le point P1) de chaque impulsion en dent de scie faisant partie de l'onde A, tandis que les impulsions de synchronisation verticale déterminent la fin (par exemple, le point P4) de chaque impulsion en dent de scie faisant partie de l'onde B.

La fréquence de répétition des signaux de synchronisation varie selon les moyens d'affichage à balayage tramé en question. Parmi les moniteurs à balayage tramé disponible dans le commerce, un moniteur VGA a un signal de synchronisation horizontale dont la fréquence est de l'ordre de 31 kHz, un moniteur CGA (qui est un acronyme de la phrase anglaise «Colour Graphic Adapter») a un signal de synchronisation horizontale dont la fréquence est de l'ordre de 15 kHz, un moniteur EGA (qui est un acronyme de la phrase anglaise «Enhanced Graphic Adapter») a un signal de synchronisation horizontale dont la fréquence est de l'ordre de 21 kHz, un moniteur SVGA (qui est un acronyme de la phrase anglaise «Super Video Graphic Adapter») a un signal de synchronisation horizontale dont la fréquence est de l'ordre de 47 kHz et un moniteur Macintosh® à 14 pouces a un signal de synchronisation horizontale dont la fréquence est de l'ordre de 43 kHz. En général, la fréquence des signaux de synchronisation horizontale des moniteurs à balayage tramé disponible dans le commerce est comprise entre 10 kHz et 100 kHz.

Le générateur de données 24 génère, dans cet exemple, une série d'impulsions dont l'amplitude représente une valeur binaire. Ainsi, la série d'impulsions contient des informations binaires correspondant à des données qui seront transmises à la montre-réceptrice 8 de la figure 1. Les informations transmises par le transmetteur de données 1 peuvent être utilisées pour différentes fonctions. Dans l'exemple décrit, elles peuvent concerner le réglage de la fréquence ou la mise à l'heure de la montre-bracelet 8. Elles peuvent également être utilisées pour programmer des heures d'alarme dans la montre-bracelet 8. On peut aussi envisager le cas où l'ordinateur 3 est utilisé comme agenda électronique de table et la montre-bracelet 8 comme dispositif de rappel portable, cette dernière étant directement programmée par le transmetteur de données.

Le modulateur 23 mélange les signaux de sortie du générateur de données 24 et du générateur de signaux de synchronisation et de suppression 22 de manière que les signaux de synchronisation verticale soient modulés en amplitude par la série d'impulsions correspondant à des données à transmettre à la montre-bracelet 8.

Cependant, la présente invention s'applique également aux autres techniques de modulation, par exemple, modulation par déplacement de fréquence, modulation par déplacement de phase, etc.

Dans l'exemple décrit, la montre-bracelet 8 comporte au moins un affichage analogique. Des aiguilles de l'affichage analogique sont entraînées par un moteur pas à pas dont la bobine est également utilisée comme partie d'une antenne qui capte des données provenant du transmetteur de données 1. Il est également possible d'utiliser comme capteur de données une autre bobine déjà incorporée à un dispositif de détection d'informations portatif, par exemple une bobine élévatrice de tension pour l'alimentation d'une alarme piézoélectrique, ou encore la bobine d'une alarme électrodynamique, équipant des montres-alarmes. En outre, il est possible d'utiliser toutes autre bobine capable d'être incorporée dans un dispositif de détection d'informations portatif.

Dans la figure 5, seuls sont représentés les principaux blocs fonctionnels de la montre-bracelet 8 qui jouent un rôle dans le fonctionnement de la présente invention. Ainsi, on voit sur cette figure que la montre-bracelet 8 comprend un circuit horloger 40, un circuit de commande de moteur 41, un récepteur 42, un dispositif de mémoire 43, la bobine 44 d'un moteur pas à pas associé à un affichage analogique horloger (non représenté) et un condensateur 45.

Le circuit horloger 40 délivre des signaux à une fréquence précise au circuit de contrôle du moteur 41. En suite, ce dernier applique des impulsions motrices à la bobine 44 pour faire avancer à une vitesse angulaire déterminée le moteur pas à pas dont elle fait partie. L'affichage analogique horloger associé au moteur pas à pas indique le passage de temps correspondant à cette vitesse angulaire.

Le récepteur 42 est relié aux deux bornes de la bobine 44 pour pouvoir détecter les données qui sont captées par la bobine 44. Le condensateur 45 est relié en parallèle à la bobine 44 pour accorder la fréquence de résonance de cette dernière. Le dispositif de mémoire 43 est relié au récepteur 42 pour pouvoir stocker des données délivrées par ce dernier.

Le fonctionnement des éléments 40 à 45 ne sera pas décrit plus en détail ici. Le brevet suisse no. 639 236 décrit une montre-réceptrice dont la bobine du moteur pas à pas fait partie d'une antenne destinée à capter de l'information qui lui est transmise. L'homme du métier saura adapter sans difficulté une telle montre-réceptrice pour qu'elle remplisse les fonctionnements décrits.

A titre d'exemple, la bobine d'un moteur pas à pas du type Lavet a typiquement une inductance L de 1 H et une résistance R de 1600 Ω. Or, la fréquence f de résonance d'une antenne inductive est donnée par la formule suivante:

$$f = \frac{1}{2\pi\sqrt{LC}}$$

où C est la valeur de la capacité à travers les bornes de la l'antenne.

Dans le cas d'un signal de synchronisation de ligne verticale d'un moniteur VGA, la fréquence de répétition de ce signal est de 31,8 kHz. Pour que l'antenne inductive montrée dans la figure 5 résonne à cette fréquence, la capacité C du condensateur 45 doit avoir une valeur de 25 pF environ.

Dans le cas des moniteurs CGA, EGA, SVGA et Macintosh® à 14 pouces cités ci-dessus comme exemples, la capacité C du condensateur 45 doit avoir une valeur respectivement de 104 pF, 57 pF, 11 pF et 14 pF environ.

Avantageusement, de tels condensateurs peuvent être facilement réalisés sous forme de circuits intégrés. Ceci représente un réel avantage de taille, et notamment dans le cas où au moins un des autres éléments de la montre représentés à la figure 5, par exemple le circuit horloger 40, le circuit de commande de moteur 41, le récepteur 42 et le dispositif de mémoire 43, sont également réalisés sous forme de circuit intégré. Dans ce cas, le condensateur 45 peut être incorporé dans la montre-réceptrice sans exiger ni de l'espace supplémentaire dans cette dernière ni des étapes de fabrication supplémentaires.

Par ailleurs, le facteur de qualité Q du couple L-C est donné par la formule suivante :

$$Q = 2\pi f \frac{L}{R}$$

Dans l'exemple du moniteur VGA décrit, la valeur de ce facteur de qualité $\Omega$ est 125. Une telle antenne est donc bien adaptée à capter un signal à la fréquence du signal de synchronisation verticale susmentionné.

Enfin, il est à noter que plusieurs modifications et/ou améliorations peuvent être apportées au système d'identification d'objets selon l'invention sans sortir du cadre de celle-ci.

A ce propos, la description ci-dessus fait référence à la modulation du signal de synchronisation verticale pour transmettre des données à un dispositif de détection d'informations portatif. Il est néanmoins possible de moduler d'autres signaux faisant partie du signal vidéo composite tel que le signal de synchronisation horizontale, le signal vidéo ou le signal de suppression, ou même tout autre signal répétitif qui est associé au fonctionnement des moyens d'affichage à balayage tramé, pour transmettre ces mêmes données, à condition que la fréquence de résonance de l'antenne inductive du dispositif d'information portatif soit adaptée.

L'homme de métier saura modifier sans difficulté le mode de réalisation de l'invention montré aux figures 3 et 5 pour effectuer une telle modification. Par exemple, le modulateur 24 peut être connecté entre la sortie du générateur d'images 20 et l'entrée du mélangeur/amplificateur 21 si l'on souhaite moduler le signal vidéo.

## Revendications

1. Système de transmission de données comprenant d'une part
un transmetteur de données (1) comportant :

   - des moyens d'affichage à balayage tramé (2), et
   - des moyens générateurs de signaux (20, 22) pour commander le fonctionnement desdits moyens d'affichage à balayage tramé (2); et d'autre part
   un dispositif de détection d'informations portatif (7) destiné à recevoir lesdites données transmises par ledit transmetteur de données (1),

   **caractérisé en ce que** ledit transmetteur de données (1) comprend en outre des moyens de modulation (23) d'au moins un desdits signaux de commande des moyens d'affichage en fonction desdites données à transmettre,
   et **en ce que** ledit dispositif de détection d'informations portatif (7) comprend en outre une antenne inductive (44, 45) agencée pour capter ledit au moins un signal modulé.

2. Système de transmission de données selon la revendication 1, **caractérisé en ce que** ledit générateur de signaux (20, 22) comprend un générateur de signaux de synchronisation verticale et/ou horizontale, **en ce que** lesdits moyens de modulation (23) sont agencés pour moduler lesdits signaux de synchronisation verticale et/ou horizontale.

3. Système de transmission de données selon la revendication 2, **caractérisé en ce que** lesdits moyens de modulation (23) sont agencés pour moduler seulement ledit signal de synchronisation verticale.

4. Système de transmission de données selon l'une quelconque des revendications précédentes, **caractérisé en ce que** lesdits moyens de modulation (23) sont agencés pour effectuer une modulation d'amplitude.

5. Système de transmission de données selon l'une quelconque des revendications précédentes dans lequel ledit dispositif de détection d'informations portatif (7) comprend en outre

   - des moyens d'affichage analogique, et
   - un moteur pas à pas pour commander lesdits moyens d'affichage analogique,

   **caractérisé en ce que**
   ladite antenne inductive (44, 45) est formée par la bobine dudit moteur pas à pas.

**6.** Système de transmission de données selon la revendication 2 ou 3, **caractérisé en ce que** la fréquence dudit signal de synchronisation qui est modulé est comprise entre 10 kHz et 100 kHz.

**7.** Système de transmission de données selon l'une quelconque des revendications précédentes, **caractérisé en ce que** ladite antenne inductive (44, 45) comprend en outre un condensateur réalisé sous forme de circuit intégré.

**Patentansprüche**

**1.** Datenübertragungssystem, das einerseits versehen ist mit einem Datensender (1), der umfaßt:

- Anzeigemittel (2) mit Teilbildabtastung und
- Signalerzeugungsmittel (20, 22) zum Steuern des Betriebs der Anzeigemittel (2) mit Teilbildabtastung; und andererseits mit

    einer tragbaren Informationserfassungsvorrichtung (7), die dazu bestimmt ist, die vom Datensender (1) gesendeten Daten zu empfangen, **dadurch gekennzeichnet, daß** der Datensender (1) außerdem Mittel (23) umfaßt, die wenigstens eines der Steuersignale für die Anzeigemittel in Abhängigkeit von den zu sendenden Daten modulieren, und daß die tragbare Informationserfassungsvorrichtung (7) außerdem eine induktive Antenne (44, 45) umfaßt, die so beschaffen ist, daß sie das wenigstens eine modulierte Signal auffangen kann.

**2.** Datenübertragungssystem nach Anspruch 1, **dadurch gekennzeichnet, daß** der Signalgenerator (20, 22) einen Generator für vertikale und/oder horizontale Synchronisationssignale umfaßt und daß die Modulationsmittel (23) so beschaffen sind, daß sie die vertikalen und/oder horizontalen Synchronisationssignale modulieren.

**3.** Datenübertragungssystem nach Anspruch 2, **dadurch gekennzeichnet, daß** die Modulationsmittel (23) so beschaffen sind, daß sie nur das vertikale Synchronisationssignal modulieren.

**4.** Datenübertragungssystem nach einem der vorhergehenden Ansprüche, **dadurch gekennzeichnet, daß** die Modulationsmittel (23) so beschaffen sind, daß sie eine Amplitudenmodulation ausführen.

**5.** Datenübertragungssystem nach einem der vorhergehenden Ansprüche, in dem die tragbare Informationsvorrichtung (7) außerdem umfaßt:

- analoge Anzeigemittel und

- einen Schrittmotor zum Steuern der analogen Anzeigemittel,

    **dadurch gekennzeichnet, daß** die induktive Antenne (44, 45) durch die Wicklung des Schrittmotors gebildet ist.

**6.** Datenübertragungssystem nach Anspruch 2 oder 3, **dadurch gekennzeichnet, daß** die Frequenz des Synchronisationssignals, das moduliert wird, im Bereich von 10 kHz bis 100 kHz liegt.

**7.** Datenübertragungssystem nach einem der vorhergehenden Ansprüche, **dadurch gekennzeichnet, daß** die induktive Antenne (44, 45) außerdem einen Kondensator umfaßt, der in Form einer integrierten Schaltung verwirklicht ist.

**Claims**

**1.** Data transmission system comprising, on the one hand,
a data transmitter (1) including :

- swept frame display means (2), and
- means (20, 22) for generating signals to control the operation of said swept frame display means (2); and, on the other hand,

    a portable information detection device (7) intended to receive said data transmitted by said data transmitter (1),
    **characterized in that** said data transmitter (1) further comprises means (23) for modulating at least one of the control signals of said display means in function of said data to be transmitted,
    and **in that** said portable information detection device (7) further comprises an inductive antenna (44, 45) adapted to detect said at least one modulated signal.

**2.** Data transmission system according to claim 1, **characterized in that** said signal generator (20, 22) comprises a generator of vertical and/or horizontal synchronisation signals and **in that** said modulation means (23) are adapted to modulate said vertical and/or horizontal synchronisation signals.

**3.** Data transmission system according to claim 2, **characterized in that** said modulation means (23) are adapted to modulate only said vertical synchronisation signal.

**4.** Data transmission system according to any one of the preceding claims, **characterized in that** said modulation means (23) are adapted to effect an amplitude modulation.

**5.** Data transmission system according to any one of the preceding claims, in which said portable information detection device (7) further comprises

- analogue display means, and
- a stepping motor to control said analogue display means,

**characterized in that**
said inductive antenna, (44, 45) is formed by the coil of said stepping motor.

**6.** Data transmission system according to claim 2 or 3, **characterized in that** the frequency of said modulated synchronisation signal is comprised between 10 kHz and 100 kHz.

**7.** Data transmission system according to anyone of the preceding claims, **characterized in that** said inductive antenna (44, 45) further comprises a capacitor realised in a form of an integrated circuit.

Fig .1

# Fig . 2

P1
P3
P2

P4

9

# Fig . 3

20

21

vidéo

signaux vidéo
et signal de suppression

1

6

| Générateur
d'images |

| Mélangeur .
amplificateur |

Image

signaux de suppression

23

signaux
de deflexion

| Générateur de
signaux de sync.
et de suppression |

| Modul. |

| Générateur de
signaux de
deflexion |

22

signal sync.

signaux
de sync.

25

| Générateur
d'informations |

24

## Fig . 4

## Fig . 5